# FASCICULE DE BREVET EUROPEEN

(11) **EP 2 746 114 B1**
(45) Date de publication et mention de la délivrance du brevet: **20.05.2015**
(21) Numéro de dépôt: 12199254.9
(22) Date de dépôt: 21.12.2012
(51) Int. Cl.: B60R 25/021

(54) **Actionneur de contact pour véhicule**
Kontaktschütz für Fahrzeug
Contact actuator for a vehicle

(43) Date de publication de la demande: 25.06.2014
(73) Titulaire: U-Shin France SAS, 94046 Créteil Cedex (FR)
(72) Inventeur: Della Fiorentina, Alix, 58000 Nevers (FR); Poggi, Patrice, 58000 Nevers (FR)
(74) Mandataire: Larger, Solène

(56) Documents cités:
- EP-B1- 1 268 243
- EP-B1- 2 121 392
- FR-A1- 2 591 166

## Description

La présente invention concerne un actionneur de contact pour véhicule automobile.

Le document EP 2 121 392 A1 décrit un exemple d'actionneur de contact pour véhicule automobile de l'art antérieur.

Il est connu d'utiliser un actionneur de contact pour véhicule automobile du type comportant :
- un barillet destiné à pivoter autour d'un axe,
- une poignée comportant :
   - une tige s'étendant selon l'axe, insérée dans le barillet par une première extrémité et destiné à coulisser dans ce dernier entre une position avancée et une position reculée, la tige étant solidaire du barillet en rotation autour de l'axe, et
   - une tête fixée à une seconde extrémité de la tige, par laquelle la poignée est destinée à être saisie et manipulée, et
- une tirette destinée à se déplacer entre une position de verrouillage d'une colonne de direction et une position de déverrouillage de la colonne de direction.

Dans cet actionneur de contact connu, la poignée est une clé de contact destinée à être retirée pour que l'utilisateur l'emporte avec lui. Par ailleurs, cet actionneur de contact connu comporte un palpeur monté sur le barillet pivotant autour d'un autre axe, le palpeur présentant une extrémité destinée à être repoussée par un bord de la clé lors de l'insertion de cette dernière dans le barillet, de manière à faire pivoter le palpeur entre une première position dans laquelle le palpeur permet à la tirette de se déplacer depuis sa position de déverrouillage vers sa position de verrouillage et une seconde position dans laquelle le palpeur empêche la tirette de se déplacer depuis sa position de déverrouillage vers sa position de verrouillage.

Or, il est dans certains cas souhaitable de munir, d'une manière simple, le véhicule automobile d'une clé inamovible, par exemple pour les véhicules automobiles de location, de sorte qu'il est apparu le besoin d'un système alternatif de palpeur en particulier adapté au cas d'une clé inamovible.

Afin de répondre au moins en partie à cette problématique, il est proposé un actionneur de contact du type précité, **caractérisé en ce que** la tige présente :
- une rainure inclinée par rapport à l'axe A1 et ménagée dans la tige, et en ce qu'il comporte en outre :
- un palpeur monté sur le barillet pivotant autour d'un axe A3, le palpeur présentant un pion inséré dans la rainure inclinée, de manière à faire pivoter le palpeur entre une première position dans laquelle le palpeur permet à la tirette de se déplacer depuis sa position de déverrouillage vers sa position de verrouillage et une seconde position dans laquelle le palpeur empêche la tirette de se déplacer depuis sa position de déverrouillage vers sa position de verrouillage, lorsque la tige coulisse entre sa position avancée et sa position reculée.

Dans l'actionneur de contact proposé, un palpeur très similaire à celui d'un clé amovible peut être utilisé, de sorte que la plupart des pièces de l'actionneur de contact connu à clé amovible peuvent être réutilisées, ce qui réduit les coûts de conception et de fabrication.

De manière optionnelle, la tige présente une portion élargie dans laquelle la rainure inclinée est ménagée.

De manière optionnelle également, la portion élargie présente un méplat dans lequel la rainure inclinée est ménagée.

De manière optionnelle également, l'actionneur de contact comporte en outre un boîtier présentant une face avant, la tige présentant une première extrémité insérée dans le boîtier au travers de la face avant et une seconde extrémité dépassant par l'avant de la face avant, à laquelle la tête est fixée, et l'actionneur de contact comporte en outre une butée empêchant la sortie hors du boîtier de la tige par l'avant.

De manière optionnelle également, le boîtier définit un espace intérieur dans lequel la tige s'étend, et présente, dans cet espace intérieur, une rainure longitudinale parallèle à l'axe A1, et la tige présentant un ergot destiné à se déplacer dans la rainure longitudinale lorsque la tige se déplace entre sa position avancée et sa position reculée, la rainure longitudinale bloquant circonférentiellement l'ergot de la tige de manière à empêcher la rotation de la tige autour de l'axe A1.

De manière optionnelle également, le boîtier présente en outre, dans l'espace intérieur, une rainure circonférentielle autour de l'axe A1 croisant la rainure longitudinale dans laquelle l'ergot de la tige est destiné à se déplacer lorsque la tige, une fois arrivée à sa position reculée, est tournée autour de l'axe A1, la rainure circonférentielle bloquant longitudinalement l'ergot de la tige de manière à empêcher le déplacement de la tige le long de l'axe A1.

Un exemple de réalisation de l'invention va à présent être décrit, en référence aux dessins annexes, parmi lesquels :
- la figure 1 est une vue en trois dimensions d'un actionneur de contact pour véhicule automobile ;
- la figure 2 est une vue en trois dimensions de l'actionneur de la figure 1, avec un boîtier retiré ;
- la figure 3 est une vue en trois dimensions de l'intérieur du boîtier ; et
- la figure 4 est une vue en trois dimensions d'une partie de l'actionneur.

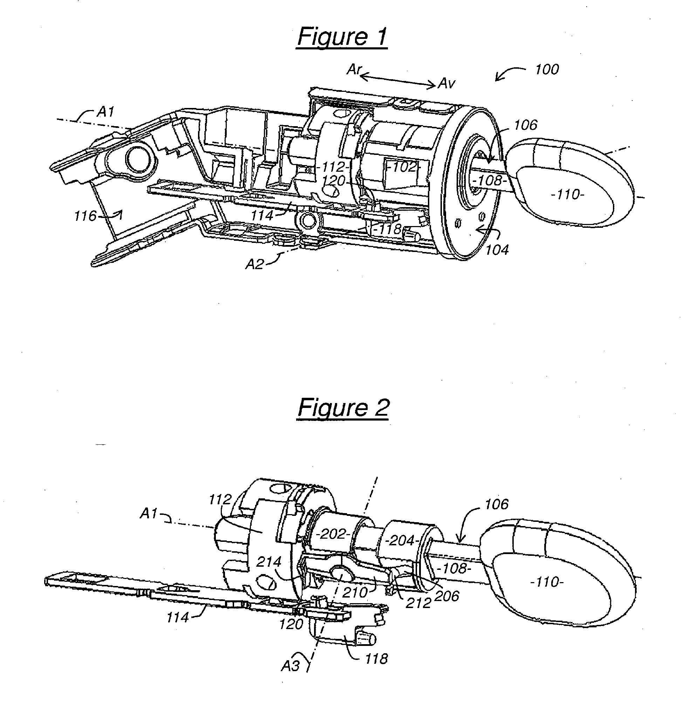

En référence à la figure 1, un actionneur de contact pour véhicule automobile 100 va à présent être décrit.

L'actionneur 100 comporte tout d'abord un boîtier 102 présentant une face extérieure 104 destinée être orientée vers un habitacle du véhicule automobile.

L'actionneur 100 comporte en outre une poignée 106 en forme de clé. La poignée 106 comporte tout d'abord une tige 108 s'étendant selon un axe A1 et insérée en partie dans le boîtier 102 par sa face extérieure 104. L'axe A1 définit une direction avant-arrière Av-Ar, l'avant étant dans le sens de la face extérieure 104, appelée par la suite face avant 104. La tige 108 présente ainsi une extrémité avant dépassant de la face avant 104 du boîtier 102, à laquelle une tête aplatie 110 est fixée. La poignée 106 est destinée à être saisie et manipulée par cette tête 110.

L'actionneur 100 comporte en outre un arbre à cames 112 située à l'arrière du boîtier 102 dans la continuité de l'axe A1. L'arbre à cames 112 est destiné à pivoter autour de l'axe A1 par rapport au boîtier 102.

L'actionneur 100 comporte en outre une tirette 114 s'étendant le long de l'axe A1 et destinée à coulisser parallèlement à cet axe A1 par rapport au boîtier 102, entre une position arrière de verrouillage d'une colonne de direction et une position avant de déverrouillage de la colonne de direction. Cette colonne de direction n'est pas représentée sur les figures, mais s'étend dans un logement 116, dans lequel la tirette 114 pénètre en position de verrouillage et duquel la tirette 114 est dégagée en position de déverrouillage.

L'actionneur 100 comporte en outre une bascule 118 montée sur la tirette 114 de manière pivotante selon un axe A2 orthogonal à l'axe A1. La bascule 118 présente un doigt 120 s'étendant vers l'axe A1.

En référence à la figure 2, l'actionneur 100 comporte en outre un barillet 202 de forme cylindrique centrée sur l'axe A1. Le barillet 302 est destiné à pivoter autour de l'axe A1 par rapport au boîtier 102 et solidaire de l'arbre à cames 112 en rotation autour de l'axe A1 de manière à entraîner ce dernier. Le barillet 202 présente une ouverture dans laquelle une extrémité arrière de la tige 108 est insérée. La tige 108 est destinée à coulisser dans le barillet 202 tout en étant solidaire de ce dernier en rotation autour de l'axe A1 de manière à entraîner le barillet 202 en rotation. La tige 108 présente une portion élargie 204 située à l'avant du barillet 202, de forme cylindrique avec un méplat latéral et de diamètre correspondant à celui du barillet 202 de manière à être dans la continuité de ce dernier. Une rainure 206 inclinée par rapport à l'axe A1 est ménagée dans le méplat de la portion élargie 204. En outre, la tige 108 présente un ergot 208 se projetant radialement depuis la portion cylindrique 304. Dans l'exemple décrit, l'ergot 208 a la forme d'une nervure circonférentielle s'étendant sur la portion cylindrique 304.

L'actionneur 100 comporte en outre un palpeur 210 monté sur le barillet 202 de manière pivotante autour d'un axe A3 transverse à l'axe A1. Le palpeur 210 a une forme allongée et est monté pivotant dans sa partie centrale. Le palpeur 210 présente, à une extrémité, un pion 212 inséré dans la rainure inclinée 206 de la poignée 106 et, à une autre extrémité, un ergot 214.

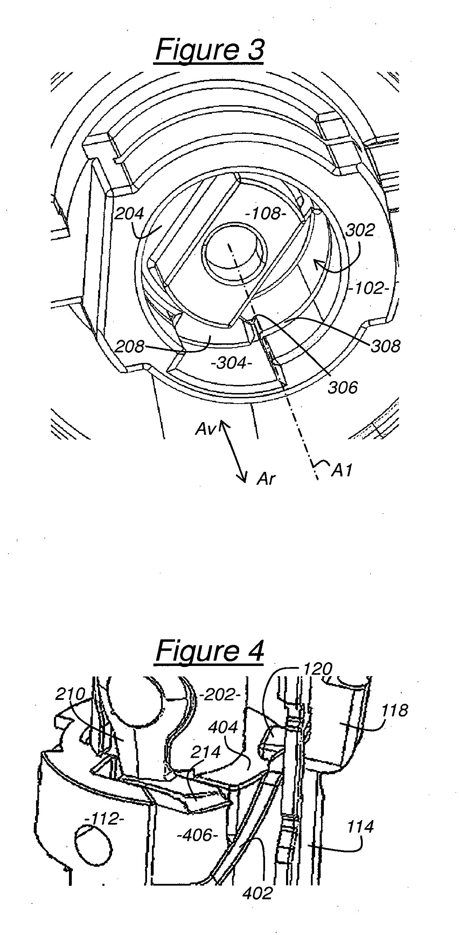

En référence à la figure 3, le boîtier 102 définit un espace intérieur cylindrique 302 dans lequel la tige 108, et en particulier la portion élargie 204 s'étend. Le boitier 102 présente, dans cet espace intérieur 302, une rainure longitudinale 304 parallèle à l'axe A1 et présentant un bord avant 306. Le boîtier 102 présente en outre, toujours dans l'espace intérieur 302, une rainure circonférentielle 308 s'étendant autour de l'axe A1 et croisant la rainure longitudinale 304. L'ergot 208 est destiné à successivement avancer dans les rainures 304 et 308, comme cela sera expliqué par la suite.

En référence à la figure 4, l'arbre à cames 112 présente une rampe 402 s'étendant hélicoïdalement autour de l'axe A1, et un palier 404 auquel se termine la rampe 402, le palier 404 bordant en partie la rampe 402 du côté de l'axe A1. L'arbre à cames 112 est en outre muni d'une rainure longitudinale de retour 406 reliant le palier 404 au bas de la rampe 402.

Le fonctionnement de l'actionneur 100 va à présent être décrit.

Au départ, la poignée 106 est dans une position avancée vers l'habitacle du véhicule. La tige 108 de la poignée 106 ne peut pas être sortie hors du boîtier 102 par l'avant car l'ergot 208 de la poignée 106 bute contre le bord avant 306 de la rainure longitudinale 304 du boîtier 102, comme cela est visible sur la figure 3.

En outre, la rainure longitudinale 304 empêche un déplacement circonférentiel de l'ergot 208, et donc la rotation de la poignée 106. La tirette 114 est dans sa position arrière de verrouillage de la colonne de direction. La bascule 118 est dans une position dégagée, de sorte que son doigt 120 repose sur le bas de la rampe 402. Le palpeur 210 est également dans une position dégagée dans laquelle son ergot 214 est dégagé de la rainure de retour 406.

L'utilisateur pousse alors sur la poignée 106 de manière à la faire coulisser vers l'arrière jusqu'à une position reculée. L'ergot 208 de la poignée 106 avance alors dans la rainure longitudinale 304 du boîtier 102, cette dernière empêchant un déplacement circonférentiel de l'ergot 208, et donc la rotation de la poignée 106. Lors de ce coulissement, le pion 212 du palpeur 210 est entrainé par la rainure 206 de manière à faire pivoter le palpeur 210 jusqu'à ce que son ergot 214 obstrue la rainure de retour 406, tel que cela est représenté sur la figure 4.

L'utilisateur tourne alors la poignée 106 jusqu'à une position tournée. L'ergot 208 de la poignée 106 se déplace alors dans la rainure circonférentielle 308 du boîtier 102, cette dernière empêchant le coulissement en avant ou en arrière de la tige 108, et donc de la poignée 106. La tige 108 entraine en rotation l'ensemble du barillet 202 et de l'arbre à cames 112. Lors de la rotation de l'arbre à cames 112, le doigt 120 de la bascule 118 glisse sur la rampe 402 et entraine la tirette 114 vers l'avant jusqu'à ce que cette dernière atteigne une position de déverrouillage de la colonne de direction. Le doigt 120 de la bascule 118 atteint alors le palier 404. Des moyens de rappel (non représentés) déplacent alors la bascule 118 dans une position basculée (illustrée sur la figure 4) telle que, lorsque l'utilisateur tourne à nouveau la poignée 106 de manière à entraîner le barillet 202 et l'arbre à cames 112, le doigt 120 de la bascule 118 glisse non sur la rampe 402, mais sur le palier 404 à côté de la rampe 402 et sur l'ergot 214 du palpeur 210 obstruant la rainure de retour 406. Ainsi, l'ergot 214 du palpeur 210 empêche le doigt 120 de la bascule 118 d'emprunter la rainure de retour 406 qui aurait permis à la tirette 114 de retourner en position arrière de verrouillage de la colonne de direction.

L'utilisateur ramène alors la rainure 206 de la tige 108 en position non tournée, c'est-à-dire de sorte que l'ergot 208 de la tige 108 se trouve dans la rainure longitudinale 304 du boîtier 102. Dans cette position, le doigt 120 de la bascule 118 est en butée contre l'ergot 214 du palpeur 210 qui l'empêche d'emprunter la rainure de retour 406.

L'utilisateur tire alors la poignée 106 vers l'avant pour l'amener de la position reculée jusqu'à la position avancée. Lors du coulissement, la rainure inclinée 206 de la tige 108 déplace le pion 212 du palpeur 210 de manière à faire pivoter le palpeur 210 de sorte que l'ergot 214 du palpeur 210 se dégage de la rainure de retour 406. Le doigt 120 de la bascule 118 n'étant plus bloqué, le doigt 120 avance dans la rainure de retour jusqu'à atteindre le bas de la rampe 402, la tirette 114 retourne en position arrière de verrouillage de la colonne de direction et la bascule 118 retourne en position dégagée.

L'invention n'est pas limitée à l'exemple de réalisation précédemment décrit, mais au contraire définie par les revendications annexées.

## Revendications

1. Actionneur de contact pour véhicule automobile (100), comportant :
- un barillet (202) destiné à pivoter autour d'un axe A1,
- une poignée (106) comportant :
- une tige (108) s'étendant selon l'axe A1, insérée dans le barillet (202) par une première extrémité et destiné à coulisser dans ce dernier entre une position avancée et une position reculée, la tige (108) étant solidaire du barillet (202) en rotation autour de l'axe A1, et
- une tête (110) fixée à une seconde extrémité de la tige (108), par laquelle la poignée (106) est destinée à être saisie et manipulée, et
- une tirette (114) destinée à se déplacer entre une position de verrouillage d'une colonne de direction et une position de déverrouillage de la colonne de direction, l'actionneur de contact (100) étant **caractérisé en ce que** la tige présente :
- une rainure (206) inclinée par rapport à l'axe A1 et ménagée dans la tige (108), et et **en ce qu'**il comporte en outre :
- un palpeur (210) monté sur le barillet (202) pivotant autour d'un axe A3, le palpeur (210) présentant un pion (212) inséré dans la rainure inclinée (206), de manière à faire pivoter le palpeur (210) entre une première position dans laquelle le palpeur (210) permet à la tirette (114) de se déplacer depuis sa position de déverrouillage vers sa position de verrouillage et une seconde position dans laquelle le palpeur (210) empêche la tirette (114) de se déplacer depuis sa position de déverrouillage vers sa position de verrouillage, lorsque la tige (108) coulisse entre sa position avancée et sa position reculée.

2. Actionneur de contact (100) selon la revendication 1, dans lequel la tige (108) présente une portion élargie (204) dans laquelle la rainure inclinée (206) est ménagée.

3. Actionneur de contact (100) selon la revendication 2, dans lequel la portion élargie (204) présente un méplat dans lequel la rainure inclinée (206) est ménagée.

4. Actionneur de contact (100) selon l'une quelconque des revendications 1 à 3, comportant en outre :
- un boîtier (102) présentant une face avant (104),
dans lequel la tige (108) présente une première extrémité insérée dans le boîtier (102) au travers de la face avant (104) et une seconde extrémité dépassant par l'avant de la face avant (104), à laquelle la tête (110) est fixée, et comportant en outre :
- une butée (306) empêchant la sortie hors du boîtier (102) de la tige (108) par l'avant.

5. Actionneur de contact (100) selon la revendication 4, dans lequel le boîtier (102) définit un espace intérieur (302) dans lequel la tige (108) s'étend, et présente, dans cet espace intérieur (302), une rainure longitudinale (304) parallèle à l'axe A1, et dans lequel la tige (108) présente un ergot (208) destiné à se déplacer dans la rainure longitudinale (304) lorsque la tige (108) se déplace entre sa position avancée et sa position reculée, la rainure longitudinale (304) bloquant circonférentiellement l'ergot (208) de la tige (108) de manière à empêcher la rotation de la tige (108) autour de l'axe A1.

6. Actionneur de contact (100) selon la revendication 5, dans lequel le boîtier (102) présente en outre, dans l'espace intérieur (302), une rainure circonférentielle (308) autour de l'axe A1 croisant la rainure longitudinale (304) dans laquelle l'ergot (208) de la tige (108) est destiné à se déplacer lorsque la tige (108), une fois arrivée à sa position reculée, est tournée autour de l'axe A1, la rainure circonférentielle (308) bloquant longitudinalement l'ergot (208) de la tige (108) de manière à empêcher le déplacement de la tige (108) le long de l'axe A1.

## Patentansprüche

1. Kontaktstellorgan für Kraftfahrzeug (100), das Folgendes umfasst:
- einen Zylinder (202), der dazu bestimmt ist, sich um eine Achse A1 zu drehen,
- einen Griff (106), der umfasst:
- einen Stift (108), der sich längs der Achse A1 erstreckt und mit einem ersten Ende in den Zylinder (202) eingesteckt ist und dazu bestimmt ist, in diesem Letzteren zwischen einer vorgerückten Position und einer zurückgezogenen Position zu gleiten, wobei der Stift (108) mit dem Zylinder (202) drehfest um die Achse A1 verbunden ist, und
- einen Kopf (110), der an einem zweiten Ende des Stifts (108) befestigt ist und über den der Griff (106) ergriffen und betätigt wird, und
- einen Zug (114), der dazu bestimmt ist, zwischen einer Verriegelungsposition einer Lenksäule und einer Entriegelungsposition der Lenksäule verlagert zu werden,
wobei das Kontaktstellorgan (100) **dadurch gekennzeichnet ist, dass** der Stift Folgendes aufweist:
- eine Rille (206), die in Bezug auf die Achse A1 geneigt ist und in dem Stift (108) ausgespart ist, und dass es außerdem Folgendes umfasst:
- einen Fühler (210), der an dem Zylinder (202) schwenkbar um eine Achse A3 montiert ist, wobei der Fühler (210) einen Stummel (212) aufweist, der in die geneigte Rille (206) eingesetzt ist, derart, dass ein Schwenken des Fühlers (210) zwischen einer ersten Position, in der der Fühler (210) es dem Zug (114) erlaubt, sich aus seiner Entriegelungsposition in seine Verriegelungsposition zu verlagern, und einer zweiten Position, in der der Fühler (210) den Zug (114) daran hindert, sich aus der Entriegelungsposition in seine Verriegelungsposition zu verlagern, bewirkt wird, wenn der Stift (108) zwischen seiner vorgerückten Position und seiner zurückgezogenen Position gleitet.

2. Kontaktstellorgan (100) nach Anspruch 1, wobei der Stift (108) einen erweiterten Abschnitt (204) aufweist, in dem die geneigte Rille (206) ausgespart ist.

3. Kontaktstellorgan (100) nach Anspruch 2, wobei der erweiterte Abschnitt (204) eine Abflachung aufweist, in der die geneigte Rille (206) ausgespart ist.

4. Kontaktstellorgan (100) nach einem der Ansprüche 1 bis 3, das außerdem Folgendes umfasst:
- ein Gehäuse (102), das eine Vorderseite (104) aufweist,
wobei der Stift (108) ein erstes Ende, das in das Gehäuse (102) durch die Vorderseite (104) eingeführt ist, und ein zweites Ende, das von der Vorderseite (104) nach vorn vorsteht und an dem der Kopf (110) befestigt ist, aufweist, und außerdem umfasst:
- einen Anschlag (306), der verhindert, dass der Stift (108) aus dem Gehäuse (102) nach vorn austritt.

5. Kontaktstellorgan (100) nach Anspruch 4, wobei das Gehäuse (102) einen Innenraum (302) definiert, in dem sich der Stift (108) erstreckt, und in diesem Innenraum (302) eine Längsrille (304) parallel zu der Achse A1 aufweist und wobei der Stift (108) einen Ansatz (208) aufweist, der sich in der Längsrille (304) verlagern soll, wenn sich der Stift (108) zwischen seiner vorgerückten Position und seiner zurückgezogenen Position verlagert, wobei die Längsrille (304) den Ansatz (208) des Stifts (108) in Umfangsrichtung blockiert, derart, dass die Drehung des Stifts (108) um die Achse A1 verhindert wird.

6. Kontaktstellorgan (100) nach Anspruch 5, wobei das Gehäuse (102) außerdem in dem Innenraum (302) eine Umfangsrille (308) um die Achse A1 aufweist, die die Längsrille (304) kreuzt, in der sich der Ansatz (208) des Stifts (108) verlagern soll, wenn der Stift (108), sobald er in seiner zurückgezogenen Position angekommen ist, um die Achse A1 gedreht wird, wobei die Umfangsrille (308) den Ansatz (208) des Stifts (108) in Längsrichtung blockiert, derart, dass die Verlagerung des Stifts (108) längs der Achse A1 verhindert wird.

## Claims

1. Contact actuator (100) for a motor vehicle, comprising:
- a barrel (202) intended to pivot about an axis A1,
- a handle (106) comprising:
- a rod (108) extending along the axis A1, inserted into the barrel (202) by a first end and intended to slide in the latter between an advanced position and a retreated position, the rod (108) being coupled in rotation to the barrel (202) about the axis A1, and
- a head (110) fixed to a second end of the rod (108) and by which the handle (106) is intended to be seized and manipulated, and
- a pull bar (114) intended to move between a position for locking a steering column and a position for unlocking the steering column,
the contact actuator (100) being **characterized in that** the rod has:
- a groove (206) inclined with respect to the axis A1 and formed in the rod (108), and **in that** it additionally comprises:
- a feeler (210) mounted on the barrel (202) and pivoting about an axis A3, the feeler (210) having a pin (212) inserted into the inclined groove (206) in such a way as to pivot the feeler (210) between a first position in which the feeler (210) allows the pull bar (114) to move from its unlocking position to its locking position and a second position in which the feeler (210) prevents the pull bar (114) from moving from its unlocking position to its locking position when the rod (108) slides between its advanced position and its retreated position.

2. Contact actuator (100) according to Claim 1, in which the rod (108) has a widened portion (204) in which the inclined groove (206) is formed.

3. Contact actuator (100) according to Claim 2, in which the widened portion (204) has a flat in which the inclined groove (206) is formed.

4. Contact actuator (100) according to any one of Claims 1 to 3, additionally comprising:
- a casing (102) having a front face (104), in which the rod (108) has a first end inserted into the casing (102) through the front face (104) and a second end projecting through the front of the front face (104), to which the head (110) is fixed, and additionally comprising:
- a stop (306) preventing the rod (108) from coming out of the casing (102) through the front.

5. Contact actuator (100) according to Claim 4, in which the casing (102) defines an inner space (302) in which the rod (108) extends, and has, in this inner space (302), a longitudinal groove (304) parallel to the axis A1, and in which the rod (108) has a lug (208) intended to move in the longitudinal groove (304) when the rod (108) moves between its advanced position and its retreated position, the longitudinal groove (304) circumferentially blocking the lug (208) of the rod (108) so as to prevent the rod (108) from rotating about the axis A1.

6. Contact actuator (100) according to Claim 5, in which the casing (102) additionally has, in the inner space (302), a circumferential groove (308) about the axis A1 crossing the longitudinal groove (304) in which the lug (208) of the rod (108) is intended to move when the rod (108), once arrived at its retreated position, is rotated about the axis A1, the circumferential groove (308) longitudinally blocking the lug (208) of the rod (108) so as to prevent the rod (108) from moving along the axis A1.
